# EUROPÄISCHE PATENTSCHRIFT

(11) **EP 0 557 700 B1**
(45) Veröffentlichungstag und Bekanntmachung des Hinweises auf die Patenterteilung: **09.08.1995**
(21) Anmeldenummer: 93100608.4
(22) Anmeldetag: 07.05.1988
(51) Int. Cl.: F16H 47/04

(54) **Stufenlos wirkendes hydrostatisches Lastschaltgetriebe**
Continuously variable hydrostatic-mechanical power transmission
Boîte de vitesse hydrostatique-mécanique à réglage continu

(30) Priorität: 30.11.1987 DE 3740501; 26.01.1988 DE 3802118; 12.05.1987 DE 3715730
(43) Veröffentlichungstag der Anmeldung: 01.09.1993
(62) Teilanmeldung aus: 88107357.1
(73) Patentinhaber: Jarchow, Friedrich, Prof. Dr.-Ing., D-45133 Essen (DE)
(72) Erfinder: Jarchow, Friedrich, Prof. Dr.-Ing., D-45133 Essen (DE); Tenberge, Peter, Dr.-Ing., D-8510 Fürth (DE)
(74) Vertreter: Herrmann-Trentepohl, Werner, Dipl.-Ing.

(56) Entgegenhaltungen:
- EP-A- 0 059 055
- DE-A- 2 757 300
- DE-A- 3 147 447
- DE-C- 3 512 523
- US-A- 3 580 107
- US-A- 3 709 060
- US-A- 3 888 139

## Beschreibung

Stufenlos wirkende hydrostatisch-mechanische Lastschaltgetriebe der im Oberbegriff der Patentansprüche angegebenen Art eignen sich vorteilhaft für Kraftfahrzeuge, da sie sich in weiten, Bereichen stufenlos verstellen lassen und außerdem gute Wirkungsgrade haben. Der relativ große Stellbereich erlaubt den Betrieb der Brennkraftmaschine auf Vorzugskennlinien. Solche Kennlinien können z. B. die Kurve für minimalen Kraftstoffverbrauch oder eine Linie für ein gutes Beschleunigungsverhalten sein.

Bei den Getrieben nach dem Oberbegriff des Anspruches 1 sollen die Schaltungen für einen Gangwechsel bei synchronen Drehzahlen erfolgen. Bei einem Gangwechsel kehrt sich nun aber die Leistungsflußrichtung im hydrostatischen Getriebe um. Die Verdrängermaschinen vertauschen dabei ihre Funktionen als Pumpe und Motor. Arbeitet eine Verdrängermaschine in dem alten Gang als Pumpe dann muß zur Deckung der Leckölströme und zur Erreichung synchroner Drehzahlen ihr Verdrängungsvolumen auf einen größeren Wert eingestellt werden als den des theoretischen Verdrängungsvolumens. der für leckölfreien Betrieb vorliegen würde. Nach erfolgtem Gangwechsel wirkt dann die Verdrängermaschine als Motor. Im neuen Gang ist ihr eingestelltes Verdrängungsvolumen zu groß. Es müßte jetzt kleiner als ihr theoretisches sein. Dadurch wird momentan der Synchronlauf der vom Gangwechsel betroffenen Getriebeteile gestört. Noch vor dem Auslegen des alten Ganges entsteht eine Verspannung mit Druckanstieg. Die bereitgestellte Schaltkraft trennt den so noch belasteten alten Gang plötzlich wodurch ein Schaltruck entsteht. Wenn die Verdrängermaschine im alten Gang als Motor läuft, hat sie im neuen Gang, wo sie als Pumpe wirkt, ein zu kleines Verdrängungsvolumen. Das bewirkt ebenfalls einen Ruck.

Das Einlegen eines neuen Ganges bei synchronen Drehzahlen kann dadurch behindert werden, daß bei der Schaltkupplung Zahn vor Zahn steht. Durch dynamisch bedingtes Überschwingen der volumengeregelten Verdrängermaschine kann der Synchronlauf gestört werden, so daß es nicht zum Einlegen des neuen Ganges kommt.

Die Schaltkräfte zur Betätigung der Schaltkupplungen müssen so bemessen sein, daß unmittelbar nach Verlagern der Last von dem alten auf den neuen Gang, das durch entsprechende Verdrängungsvolumenveränderung bewirkt wird, der alte Gang drehmomentfrei ausgelegt wird. Bei zu großer Schaltkraft würde der alte Gang vorzeitig herausgerissen. Dies wäre mit Rucken und Verschleiß verbunden. Bei zu kleiner Schaltkraft würde diese zur Trennung der Schaltkupplung nicht ausreichen. Die Bereitstellung der Schaltkräfte erfolgt durch Schaltzylinder, die vom Speisekreislauf des hydrostatischen Getriebes versorgt werden. Der Speisedruck richtet sich nach den Betriebsbedingungen. Ein schwankender Speisedruck hat aber auch veränderliche Schaltkräfte zur Folge und stört so eine ruckfreies Schalten.

Schalt-Lamellenkupplungen, die in den Figuren der Patentschritten US-A-3 709 060 und US-A-3 888 139 vorgesehen sind, können Differenzdrehzahlen rutschend ausgleichen und für eine hohe Schaltqualität überlappend geschaltet werden. Allerdings bauen Schalt-Lamellenkupplungen im Vergleich zu Schalt-Zahnkupplungen erheblich größer und erzeugen im geöffneten Zustand Leerlaufverlustleistungen, die den Wirkungsgrad des Getriebes verschlechtern.

Der Einsatz von Schalt-Zahnkupplungen erfordert aber für die Erreichung von guten Schaltqualitäten besondere konstruktive Maßnahmen. Die Patentschriften US-A-3 580 107 und DE-C-3 147 447 zeigen den Gegenstand des Oberbegriffes des Anspruchs 1, aber, geben keine Hinweise, wie die vorstehend beschriebenen Störeffekte eliminiert werden können.

Der Erfindung liegt die Aufgabe zugrunde, bei einem hydrostatisch-mechanischen Lastschaltgetriebe mit Schalt-Zahnkupplungen für die einzelnen Gänge in der als bekannt vorausgesetzten Art die Schaltqualität zu verbessern, d. h. Schaltstöße zu vermeiden.

Die Lösung der Erfindungsaufgabe beinhaltet das Kennzeichen des 1. Anspruches. Eine zweckmäßige Ausführungsform beschreibt der 2. Anspruch.

Die Umsetzung des 1. Anspruches bewirkt eine Verbesserung der Schaltqualität, wie sie z. B. bei Personenkraftwagen der gehobenen Komfortklasse gefordert wird. Die Schaltungen der Zahnkupplungen erfolgen nun vor den eigentlichen Gangwechseln. Bei diesen vorbereitenden Schaltungen sind nur leerlaufende Getriebeteile anzusynchronisieren. Die Gangwechsel selbst besorgen jetzt Schalt-Lamellenkupplungen ohne nennenswerte Differenzdrehzahlen.
Im Vergleich zu Lösungen, die nur Schalt-Lamellenkupplungen vorsehen, fallen die Leerlaufverlustleistungen und die Baugröße des Getriebes geringer aus.
Nach dem 2. Anspruch geschieht das Anfahren mit der Schalt-Lamellenkupplung, die für den 1. Gang vorgesehen ist.

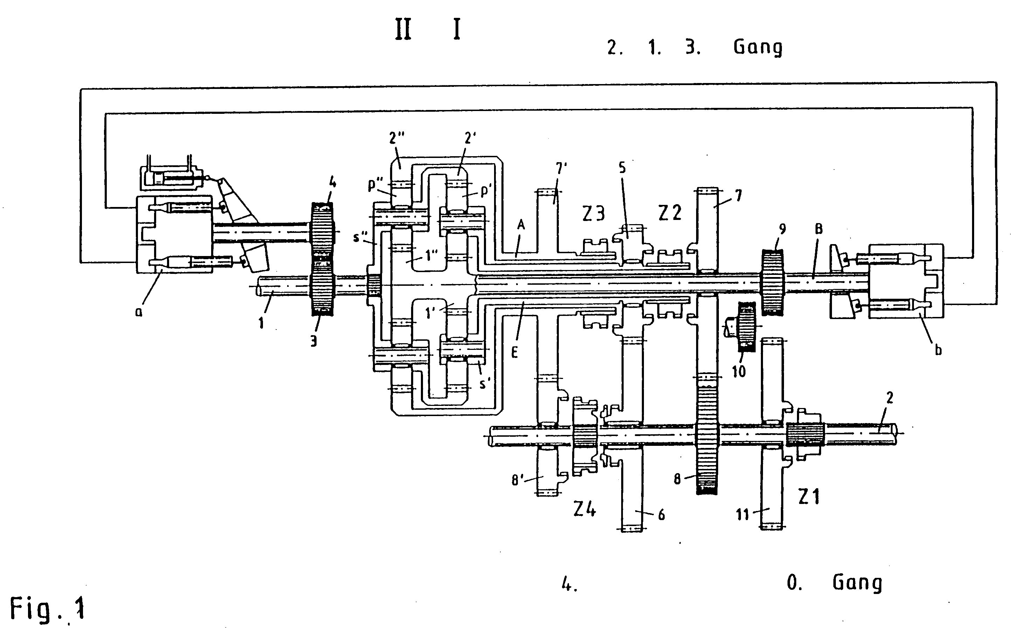

Im folgenden wird die Erfindung zum besseren Verständnis anhand der Figuren 1 bis 4 näher erläutert. Es zeigen
- Fig. 1 und 2: ein hydrostatisch-mechanisches Lastschaltgetriebe in einer Ausführungsform nach dem Oberbegriff des Anspruches 1
- Fig. 3: ein hydrostatisch-mechanisches Lastschaltgetriebe in einer Ausführungsform nach nach Anspruch 1, wobei das Anfahren rein hydrostatisch erfolgt.
- Fig. 4: ein hydrostatisch-mechanisches Lastschaltgetriebe in einer Ausführungsform nach nach den Ansprüchen 1 und 2
Das vierwellige Planetengetriebe des Konzeptes nach Fig. 1 besteht aus, der Planetenstufe I mit dem Sonnenrad 1'. Hohlrad 2' und Planetenradträger s' mit den Planetenrädern p' und der Planetenstufe II mit dem Sonnenrad 1'', Hohlrad 2'' und Planetenradträger s'' mit den Planetenrädern p''. Es bilden die Glieder s'' und 2' die Antriebswelle 1, die Glieder 1' und 1'' die Welle B für den Anschluß der volumenkonstanten Verdrängermaschine b, Glied s' die langsamlaufende Koppelwelle E und Glied 2'' die schnellaufende Koppelwelle A. Die volumenverstellbare Verdrängermaschine a steht über die Zahnräder 3,4 mit der Antriebswelle 1 in Verbindung. Die Schalt-Zahnkupplung Z1 kann zum Anfahren vorwärts oder rückwärts den 0. Gang mit den Rädern 9, 10, 11 einlegen und so die Verdrängermaschine b mit der Abtriebswelle 2 verbinden. Mit der Doppelschalt-Zahnkupplung Z2 läßt sich die Koppelwelle E über die Räder 5,6 für den 1. Gang oder über die Räder 7,8 des 3. Ganges und mit der Schalt-Zahnkupplung Z3 die Koppelwelle A über die Räder 5,6 für den 2. Gang sowie mit der Doppelschalt-Zahnkupplung Z4 über die Räder 7',8' mit der Abtriebswelle 2 verbinden. Die rechte Hälfte von Z4 verfügt über Synchronisierungselemente, um Rad 6 vorbereitend zu- oder ausschalten zu können, Das Lösen von Rad 6 soll zu hohe Losraddrehzahlen von Rad 5 vermeiden, die im 4. Gang entstehen würden.

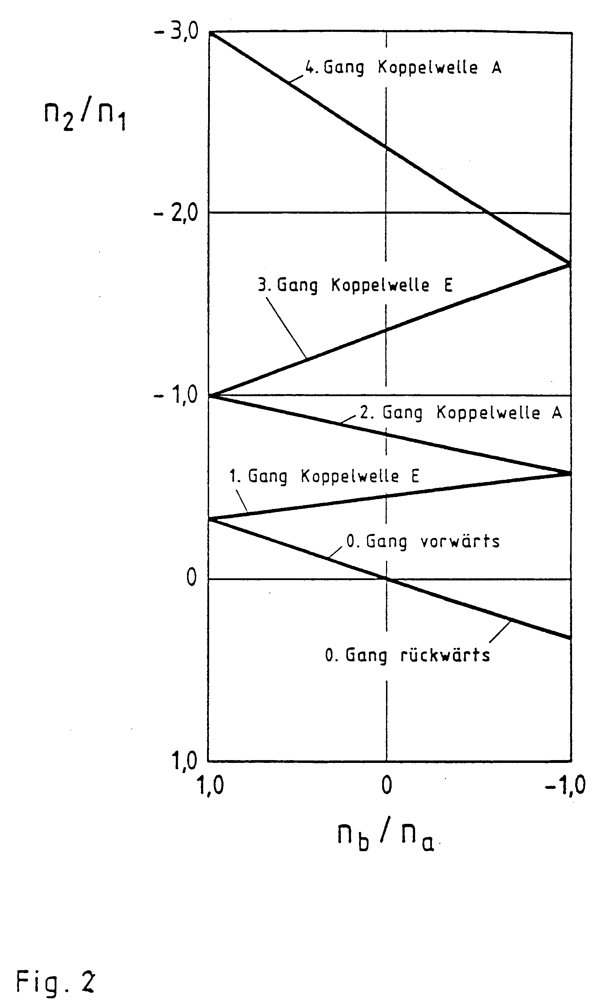

Fig. 2 stellt für das Getriebe nach Fig. 1 Verläufe von Drehzahlen n dar. Das Diagramm zeigt die auf die Antriebsdrehzahl bezogene Abtriebsdrehzahl n₂/n₁ abhängig vom Drehzahlverhältnis der Verdrängermaschinen n_{b}/nₐ und markiert die jeweils leistungsführenden Gänge und Koppelwellen.

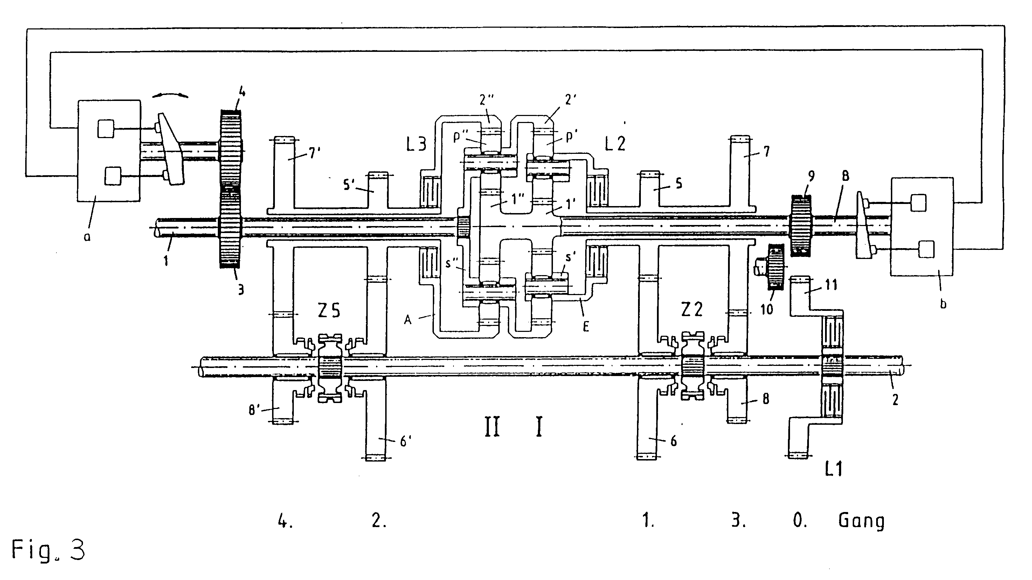

Die Basis des Konzeptes nach Fig. 3 bildet das Getriebe nach Fig. 1. Anstelle der Schalt-Zahnkupplung Z1 tritt jetzt eine schaltbare Lamellenkupplung L1. Außerdem lassen sich gemäß Anspruch 1 die Koppelwelle E durch die Schalt-Lamellenkupplung L2 und die Koppelwelle A durch die Schalt-Lamellenkupplung L3 unterbrechen. Die Doppelschalt-Zahnkupplungen Z2 für den 1. Gang mit den Rädern 5,6 und den 3. Gang mit den Rädern 7,8 und Z5 für den 2. Gang mit den Rädern 5', 6' und den 4. Gang mit den Rädern 7', 8' haben Synchronisierungselemente. Die Lamellenkupplungen besorgen einen ruckfreien Wechsel der Gänge, während die Zahnkupplungen vorbereitende Schaltungen ausführen und dabei nur leerlaufende Getriebeteile ansynchronisieren müssen.

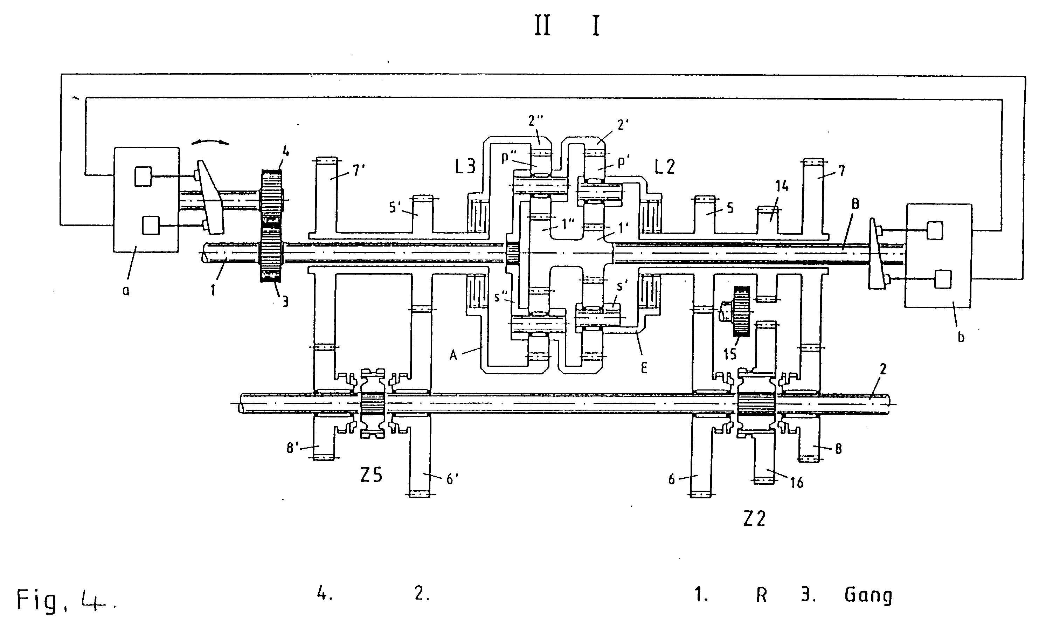

Aus dem Getriebe nach Fig. 3 folgt das Getriebe nach Fig. 4. Die Lamellenkupplung L2 dient gemäß Anspruch 2 jetzt auch als Anfahrkupplung. Somit kann die Lamellenkupplung L1 mit den Anschlußrädern 9, 10, 11 entfallen. Allerdings benötigt man jetzt einen Rückwärtsgang R, den die Zahnräder 14, 15, 16 besorgen, wobei das Rad 15 als Schieberad ausgeführt ist.

## Patentansprüche

1. Hydrostatisch-mechanisches Lastschaltgetriebe
bestehend aus einem mehrwelligen Zahnräder-Planetengetriebe, einem stufenlos einstellbaren hydrostatischen Getriebe mit einer volumenverstellbaren Verdrängermaschine (a) und einer volumenkonstanten Verdrängermaschine (b) sowie Zahnräder-Nachschaltstufen und Schalt-Zahnkupplungen,
wobei bei dem Planetengetriebe eine Welle die Antriebswelle (1) bildet, an die die Verdrängermaschine (a) angeschlossen ist, eine zweite Welle die Welle (B) darstellt, mit der die Verdrängermaschine (b) in Verbindung steht, und zwei weitere Wellen als Koppelwellen (A) und (E) fungieren,
die sich so verhalten, daß sie in einer Extremstellung des hydrostatischen Getriebes gleiche Drehzahlen aufweisen und daß sie beim Verstellen des hydrostatischen Getriebes in die andere Extremlage ihre Drehzahlen so ändern, daß die Koppelwelle (A) stetig schneller und die Koppelwelle (E) stetig langsamer wird,
wobei jede Koppelwelle durch den Anschluß von Nachschaltstufen mindestens zwei an die Abtriebswelle (2) anschließbare Gänge realisiert,
wobei ein Gangwechsel mit einem Wechsel der Koppelwelle verbunden ist,
wobei benachbarte Nachschaltstufen die gleiche Übersetzung aufweisen
und wobei schließlich alle Nachschaltstuten bei synchronen Drehzahlen, lastfrei und ohne Zugkraftunterbrechung geschaltet werden,
dadurch gekennzeichnet,
daß zwischen den Koppelwellen (E;A) und den Zahnräder-Nachschaltstufen (5;6 und 7;8 sowie 5';6' und 7';8') Schalt-Reibungskupplungen (L₂; L₃) angeordnet und für die Zahnräder-Nachschaltstufen Schaltzahnkupplungen mit Synchronisierelemente (z₂; z₅) vorgesehen sind.

2. Hydrostatisch-mechanisches Lastschaltgetriebe nach Anspruch 1
dadurch gekennzeichnet,
daß das Anfahren mit der Schaltreibungskupplung (L2) von der Koppelwelle (E) erfolgt, zu der der 1. Gang (5;6) gehört.

## Claims

1. A hydrostatic-mechanical power transmission comprising a multi-shaft toothed wheel epicyclic gearing system, a continuously variable hydrostatic drive with a displacement mechanism (a) which is adjustable in volume and a displacement mechanism (b) which is constant in volume, as well as toothed wheel gear transfer stages and toothed clutch couplings, wherein, for the epicyclic gearing, one shaft forms the drive shaft (1) to which the displacement mechanism (a) is connected, a second shaft forms a shaft (B) to which the displacement mechanism (b) is connected and two further shafts act as coupling shafts (A) and (E) which function in such a way that, in one extreme setting of the hydrostatic drive, they produce the same number of revolutions and that, on adjustment of the hydrostatic drive to the other extreme setting, they change their number of revolutions so that the coupling shaft (A) runs continuously faster and the coupling shaft (E) runs continuously slower, wherein each coupling shaft, by having gear transfer stages connected to it, provides at least two gears capable of being connected to the drive shaft (2), wherein a change of gear is linked to a change of coupling shaft, wherein adjacent gear transfer stages produce the same gear-change and wherein finally all gear transfer stages are engaged, with synchronised revolutions, without overload and without interruption of traction power, characterised in that, located between the coupling shafts (E ; A) and the toothed wheel gear transfer stages (5 ; 6 and 7 ; 8 as well as 5' ; 6' and 7' ; 8') there are friction clutch couplings (L2 ; L3), and that toothed clutch couplings with synchronising elements (Z2 ; Z5) are provided for the toothed wheel gear transfer stages.

2. A hydrostatic-mechanical power transmission according to claim 1, characterised in that the initial starting motion is effected with the friction clutch coupling (L2) from the coupling shaft (E) with which the 1st gear (5 ; 6) is associated.

## Revendications

1. Boîte de vitesse hydrostatique-mécanique, se composant d'un engrenage planétaire à roues dentées entraînant plusieurs arbres, d'un engrenage hydrostatique à réglage continu muni d'une machine volumétrique à volume réglable (a) et d'une machine volumétrique à volume constant ainsi que de paliers intercalables à roues dentées et d'embrayages à denture, un arbre formant, pour l'engrenage planétaire, un arbre de commande (1) auquel est raccordée la machine volumétrique (a), un second arbre représentant l'arbre (B) auquel est racccordée la machine volumétrique (b) et deux arbres supplémentaires fonctionnant en tant qu'arbres de couplage (A) et (E), arbres qui se comportent de façon à présenter les mêmes vitesses de rotation dans une position extrême de l'engrenage hydrostratique et à modifier leurs vitesses de rotation de façon telle, lors du réglage de l'engrenage hydrostatique dans l'autre position extrême, que l'arbre de couplage (A) tourne constamment de façon plus rapide et l'arbre de couplage (E) constamment plus lentement, chaque arbre de couplage réalisant au moins deux vitesses raccordables à l'arbre de commande (2), de par le raccordement de paliers intercalables, un changement de vitesse étant lié à un changement de l'arbre de couplage, des paliers intercalables voisins présentant la même transmission et enfin tous les paliers intercalables étant commandés sans contrainte et sans interruption de l'effort de traction, caractérisée en ce qu'entre les arbres de couplage (E, A) et les paliers intercalables à roues dentées (5, 6 et 7, 8 ainsi que 5', 6' et 7', 8') sont disposés des embrayages à friction (L₂, L₃) et en ce que des embrayages à denture avec des éléments synchronisés (Z₂, Z₅) sont prévus.

2. Boîte de vitesse hydrostatique-mécanique selon la revendication 1, caractérisée en ce que le démarrage avec l'embrayage à friction (L2) s'effectue par l'arbre de couplage (E) duquel relève la première vitesse (5, 6).
